# EUROPEAN PATENT APPLICATION

(11) **EP 4 770 075 A1**
(43) Date of publication of application: **01.07.2026**
(21) Application number: 24915560.7
(22) Date of filing: 10.12.2024
(51) Int. Cl.: H04N 7/14, H04N 21/485, H04N 21/45

(54) **ELECTRONIC DEVICE AND CONTROL METHOD THEREOF**

(30) Priority: 04.01.2024 KR 20240001302
(71) Applicant: Samsung Electronics Co., Ltd., Suwon-si, Gyeonggi-do 16677 (KR)
(72) Inventor: KIM, Junghee, Suwon-si Gyeonggi-do 16677 (KR); KIM, Dongyoon, Suwon-si Gyeonggi-do 16677 (KR); SEONG, Kibum, Suwon-si Gyeonggi-do 16677 (KR); YOON, Sangki, Suwon-si Gyeonggi-do 16677 (KR)
(74) Representative: Walaski, Jan Filip
(86) International application number: PCT/KR2024/020217
(87) International publication number: WO 2025/146978

(57) **Abstract**

An electronic apparatus is disclosed. The electronic apparatus includes a display, memory storing one or more instructions, and one or more processors operatively connected to the display and the memory, and the one or more processors, by executing the one or more instructions, are configured to control the display to display a UI screen including additional information related to content while the content is shared with an external apparatus, based on user history information for a plurality of pieces of additional information of different types included in the UI screen, obtain a UI screen in which the plurality of pieces of additional information are rearranged, and share a UI screen including the rearranged plurality of pieces of information with the external apparatus according to a preset event.

## Description

### [TECHNICAL FIELD]

The present disclosure relates to an electronic apparatus and a controlling method thereof, and more particularly, to an electronic apparatus configured to perform a video call function and a controlling method thereof.

### [BACKGROUND ART]

With the development of electronic technology, various types of electronic apparatuses have been developed and widely distributed. In particular, display apparatuses such as televisions and notebook computers have been developed in various forms.

Recently, services have been provided in which a plurality of users watch content together while performing a video call.

The above-described information is provided as background (related art) for the purpose of facilitating understanding of the present disclosure, and is not intended to be, nor should it be construed as, an admission that any of the above-described matters constitutes prior art with respect to the present disclosure.

### [DISCLOSURE OF INVENTION]

### [SOLUTION TO PROBLEM]

An electronic apparatus according to one or more embodiments includes a display, memory storing one or more instructions, and one or more processors, and the one or more processors, by executing the one or more instructions, are configured to control the display to display a UI screen including additional information related to content while the content is shared with an external apparatus, based on user history information for a plurality of pieces of additional information of different types included in the UI screen, obtain a UI screen in which the plurality of pieces of additional information are rearranged, and share a UI screen including the rearranged plurality of pieces of information with the external apparatus according to a preset event.

According to one or more embodiments, based on a score corresponding to each of the plurality of pieces of additional information being calculated based on a number of activities for each of different types of activities for each of the plurality of pieces of additional information, the plurality of pieces of additional information may be rearranged on the UI screen based on priorities of the plurality of pieces of additional information based on the score of each of the plurality of pieces of additional information.

According to one or more embodiments, the different types of activities may include sharing, viewing, and searching, and the one or more processors, by executing the one or more instructions, may be configured to calculate a score corresponding to each of the plurality of pieces of additional information by assigning different weights to the sharing, the viewing, and the searching.

According to one or more embodiments, wherein the one or more processors, by executing the one or more instructions, may be configured to, based on viewing of the content being terminated, provide a content report including information on a user reaction and commentary information, and based on a user reaction being identified while the content is shared with the external apparatus, the commentary information may be obtained during occurrence of the identified user reaction.

According to one or more embodiments, the user reaction may include at least one of a voice reaction, a chat reaction, a facial expression reaction, or a gesture reaction, and the commentary information may include at least one of screen capture information, conversation information, or sharing information.

According to one or more embodiments, the content report may include per-scene ratings calculated in a timeline order based on the information on the user reaction and the commentary information, and a content section from a time point at which a specific user reaction is identified to a time point at which a reaction related to the specific user reaction ends may be identified as one scene.

According to one or more embodiments, the one or more processors, by executing the one or more instructions, may be configured to, based on the user reaction being identified as corresponding to a preset emotion, obtain commentary information related to the content while the user reaction occurs, and the preset emotion may include at least one of a positive emotion or a negative emotion.

According to one or more embodiments, the one or more processors, by executing the one or more instructions, may be configured to control the display to display an image of a user on one side of an area of the content, and based on the user reaction being identified as corresponding to the preset emotion, control the display to temporarily switch and display the user image including the user reaction and the content area.

According to one or more embodiments, the plurality of pieces of additional information of different types may include at least one of casting, a storyline, a content background, a producer, a director, or a review rating, and based on a matrix representing a score for the plurality of pieces of additional information being obtained based on a preset algorithm and the obtained matrix being updated based on user history information for the plurality of pieces of additional information, the plurality of pieces of additional information may rearranged on the UI screen based on the updated matrix.

A server according to one or more embodiments includes a communication interface, memory storing one or more instructions, and one or more processors, and the one or more processors, by executing the one or more instructions, are configured to, based on a preset event occurring while a plurality of external apparatuses share content, provide a UI screen including additional information related to the content to one of the plurality of external apparatuses, obtain a UI screen in which the plurality of pieces of additional information are rearranged based on user history information for a plurality of pieces of additional information of different types included in the UI screen, and share the UI screen including the rearranged plurality of pieces of information with remaining ones of the plurality of external apparatuses according to a preset event. Based on a score corresponding to each of the plurality of pieces of additional information being calculated based on a number of activities for each of different types of activities for each of the plurality of pieces of additional information, the plurality of pieces of additional information may be rearranged on the UI screen based on priorities of the plurality of pieces of additional information.

A method of controlling an electronic apparatus according to one or more embodiments include displaying a UI screen including additional information related to content while the content is shared with an external apparatus, based on user history information for a plurality of pieces of additional information of different types included in the UI screen, obtaining a UI screen in which the plurality of pieces of additional information are rearranged, and sharing a UI screen including the rearranged plurality of pieces of information with the external apparatus according to a preset event.

In a non-transitory computer-readable recording medium storing a computer instruction that, when executed by a processor of an electronic apparatus, causes the electronic apparatus to perform operations, the operations include displaying a UI screen including additional information related to content while the content is shared with an external apparatus, based on user history information for a plurality of pieces of additional information of different types included in the UI screen, obtaining a UI screen in which the plurality of pieces of additional information are rearranged, and sharing a UI screen including the rearranged plurality of pieces of information with the external apparatus according to a preset event.

### [BRIEF DESCRIPTION OF DRAWINGS]

The above and other aspects and features of certain embodiments of the present disclosure will become more apparent from the following description taken in conjunction with the accompanying drawings.
FIG. 1 is a view provided to explain a video call system according to one or more embodiments;
FIG. 2A is a block diagram illustrating configuration of an electronic apparatus according to an embodiment;
FIG. 2B is a view provided to explain detailed configuration of an electronic apparatus according to one or more embodiments;
FIG. 3A is a block diagram illustrating configuration of a server according to an embodiment;
FIG. 3B is a block diagram provided to explain an operation of a server according to an embodiment;
FIG. 4 is a flowchart provided to explain a controlling method of an electronic apparatus according to one or more embodiments;
FIG. 5 is a view provided to explain an example of a UI screen according to one or more embodiments;
FIG. 6 is a flowchart provided to explain an additional information rearranging method according to one or more embodiments;
FIGS. 7A and 7B are views provided to explain examples of a UI screen according to one or more embodiments;
FIGS. 8A to 8E are views provided to explain an additional information rearranging method according to one or more embodiments;
FIG. 9 is a flowchart provided to explain a content report providing method according to one or more embodiments;
FIG. 10 is a flowchart provided to explain a content report providing method in detail according to one or more embodiments;
FIG. 11 is a view provided to explain a method of generating co-viewing commentary information according to one or more embodiments;
FIG. 12 is a view provided to explain a method of providing co-viewing commentary information according to one or more embodiments; and
FIG. 13 is a view provided to explain a method of providing a user reaction emphasis effect in detail according to one or more embodiments.

### [MODE FOR INVENTION]

The terms used in the present disclosure will be briefly described before the present disclosure is described in detail.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

In some cases, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor (not shown) except for a 'module' or a 'unit' that needs to be implemented by specific hardware.

Meanwhile, various elements and regions in the drawings are schematically illustrated. Accordingly, the technical spirit of the present disclosure is not limited by the relative sizes or spacings illustrated in the accompanying drawings.

Hereinafter, an embodiment of the present disclosure will be described in greater detail with reference to the accompanying drawings.

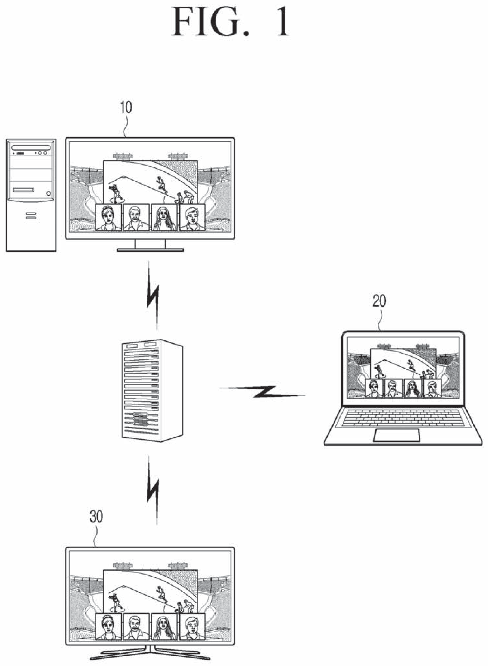

FIG. 1 is a view provided to explain a video call system according to one or more embodiments.

Referring to FIG. 1, a plurality of electronic apparatuses 10, 20, and 30 may perform communication through a server 40. According to one example, as illustrated in FIG. 1, the plurality of electronic apparatuses 10, 20, and 30 may perform content co-viewing (or simultaneous viewing) through the server 40. For example, the plurality of electronic apparatuses 10, 20, and 30 may be implemented as various types of electronic apparatuses such as a mobile phone, a smartphone, an electronic picture frame, a Digital Information Display (DID), a kiosk, a Portable Media Player (PMP), an MP3 player, a game console, a Large Format Display (LFD), a notebook, a laptop, a TV, a monitor, a projector system, and the like.

According to one example, the plurality of electronic apparatuses 10, 20, and 30 may support video calls, may execute an application (or software or program) capable of co-viewing content (hereinafter, referred to as a co-viewing application), and may transmit captured image data acquired through a camera to the server 40. The co-viewing application may be provided in the form of an icon interface on screens of the plurality of electronic apparatuses 10, 20, and 30. According to one example, when the co-viewing application is executed, the camera may be automatically turned on, but in some cases, may be turned on according to a user command.

According to one example, the server 40 may perform communication with the co-viewing application and may provide a co-viewing service through the co-viewing application. For example, when a viewing group for co-viewing content is set through the co-viewing application, the server 40 may transmit content to be co-viewed to the plurality of electronic apparatuses 10, 20, and 30 set as the group.

According to one example, the plurality of electronic apparatuses 10, 20, and 30 and/or the server 40 may share viewing group information and interest information during content co-viewing, and may generate and provide viewing commentary based on major events that occur during content co-viewing.

Accordingly, hereinafter, various embodiments for sharing viewing group information and interest information and generating and providing viewing commentary will be described.

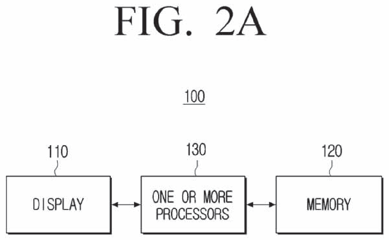

FIG. 2A is a block diagram illustrating configuration of an electronic apparatus according to an embodiment.

According to FIG. 2A, an electronic apparatus 100 includes a display 110, memory 120, and one or more processors 130. According to one example, the electronic apparatus 100 may be implemented as any one of the plurality of electronic apparatuses 10, 20, and 30 illustrated in FIG. 1.

The display 110 may be implemented as a display including a self-emissive element, or as a display including a non-self-emissive element and a backlight. For example, the display 110 may be implemented as various types of displays such as a Liquid Crystal Display (LCD), an Organic Light Emitting Diodes display (OLED), a Light Emitting Diodes display (LED), a micro light emitting diode (micro LED), a Mini LED, a Plasma Display Panel (PDP), a Quantum dot display (QD), or a Quantum dot light-emitting diodes display (QLED). The display 110 may further include a driving circuit, a backlight unit, and the like, which may be implemented in forms such as an amorphous silicon thin film transistor (a-si TFT), a low temperature poly silicon thin film transistor (LTPS TFT), or an organic thin film transistor (OTFT). Meanwhile, the display 110 may be implemented as a flexible display, a rollable display, a three-dimensional display (3D display), or a display in which a plurality of display modules are physically connected. According to an example, when the electronic apparatus 100 is implemented as a projector apparatus, the electronic apparatus 100 may include an image projection unit instead of the display 110.

The memory 120 may store data required for various embodiments. The memory 120 may be implemented in the form of a memory embedded in the electronic apparatus 100 according to a data storage purpose, or may be implemented in the form of a memory detachably attachable to the electronic apparatus 100. For example, data for driving the electronic apparatus 100 may be stored in a memory embedded in the electronic apparatus 100, and data for expansion functions of the electronic apparatus 100 may be stored in a memory detachably attachable to the electronic apparatus 100. Meanwhile, the memory embedded in the electronic apparatus 100 may be implemented as at least one of a volatile memory (for example, Dynamic Random Access Memory (DRAM), Static Random Access Memory (SRAM), or Synchronous Dynamic Random Access Memory (SDRAM)), or a nonvolatile memory (for example, One Time Programmable Read Only Memory (OTPROM), Programmable Read Only Memory (PROM), Erasable and Programmable Read Only Memory (EPROM), Electrically Erasable and Programmable Read Only Memory (EEPROM), mask read only memory (mask ROM), flash read only memory (flash ROM), flash memory (for example, NAND flash or NOR flash), a hard drive, or a Solid State Drive (SSD)). In addition, the memory detachably attachable to the electronic apparatus 100 may be implemented in the form of a memory card (for example, Compact Flash (CF), Secure Digital (SD), micro secure digital (Micro-SD), mini secure digital (Mini-SD), extreme digital (xD), Multi-Media Card (MMC)), or an external memory connectable to a USB port (for example, a USB memory).

The one or more processors 130 one 130 controls the overall operations of the electronic apparatus 100. Specifically, the one or more processors 130 may be connected to respective components of the electronic apparatus 100 and may control the overall operations of the electronic apparatus 100. For example, the one or more processors 130 may be operatively connected to the display 110 and the memory 120. The processor 130 may consist of one processor or a plurality of processors.

The one or more processors 130 may perform operations of the electronic apparatus 100 according to various embodiments by executing at least one instruction stored in the memory 120.

The one or more processors 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or any combination of the other components of the device, and may perform communication-related operations or data processing. The one or more processors 130 may execute one or more programs or instructions stored in the memory. For example, the one or more processors may perform a method according to one or more embodiments by executing one or more instructions stored in the memory.

When a method according to one or more embodiments includes a plurality of operations, the plurality of operations may be performed by one processor or by a plurality of processors. For example, when a first operation, a second operation, and a third operation are performed by the method according to one or more embodiments, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 130 may be implemented as a single core processor including a single core, or as one or more multicore processors including a plurality of cores (e.g., homogeneous multicore or heterogeneous multicore). When the one or more processors 130 are implemented as a multicore processor, each of the plurality of cores included in the multicore processor may include internal memory of the processor, such as cache memory and an on-chip memory, and a common cache shared by the plurality of cores may be included in the multicore processor. Each of the plurality of cores (or some of the plurality of cores) included in the multi-core processor may independently read and perform program instructions to implement the method according to one or more embodiments, or all (or some) of the plurality of cores may be coupled to read and perform program instructions to implement the method according to one or more embodiments.

When a method according to one or more embodiments includes a plurality of operations, the plurality of operations may be performed by one core of a plurality of cores included in a multi-core processor, or may be performed by a plurality of cores. For example, when a first operation, a second operation, and a third operation are performed by a method according to one or more embodiments, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor may mean a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, etc., but the core is not limited to the embodiments of the present disclosure. Hereinafter, for convenience of description, the one or more processors 130 will be referred to as a processor 130.

According to one embodiment, the processor 130 may control the display 110 to display a UI screen including additional information related to content while the content is being shared with an external apparatus. According to one example, a content area and the UI screen may be received from an external server (for example, the server 40 of FIG. 1).

According to one example, the additional information may include a plurality of pieces of additional information of different types. For example, different types of additional information may mean that attributes of the information are different. For example, the additional information may include different types of information such as at least one of casting, a storyline, a content background, a producer, a director, or a review rating.

According to one example, the UI screen may be divided into sub-areas each including a respective type of additional information. For example, when the UI screen has a vertically long shape, the sub-areas including the respective pieces of additional information may be arranged in a vertical direction. For example, when the UI screen has a horizontally long shape, the sub-areas including the respective pieces of additional information may be arranged in a horizontal direction.

According to one embodiment, the processor 130 may obtain a UI screen in which a plurality of pieces of additional information are rearranged based on user history information for the plurality of pieces of additional information of different types included in the UI screen. According to one example, the UI screen in which the plurality of pieces of additional information are rearranged may be obtained through the server 40.

According to one embodiment, the processor 130 may share a UI screen including rearranged plural pieces of information with an external apparatus according to a preset event. According to one example, the UI screen including the rearranged plural pieces of information (or information about the UI screen) may be shared, via the server 40, with apparatuses belonging to the same viewing group.

Meanwhile, according to one embodiment, the UI screen in which the plurality of pieces of additional information are rearranged may be obtained through the server 40, but it is also possible to obtain the UI screen in the electronic apparatus 100. Hereinafter, embodiments in which the UI screen is obtained in the electronic apparatus 100 will be described. However, However, at least some of the operations performed by the electronic apparatus 100 may be performed via the server 40 even if not explicitly stated otherwise.

According to one embodiment, when a score corresponding to each of the plurality of pieces of additional information is calculated based on the number of different types of activities for each of the plurality of pieces of additional information, priorities of the plurality of pieces of additional information may be identified based on the scores of each of the plurality of pieces of additional information. In this case, the plurality of pieces of additional information may be rearranged on the UI screen according to the priorities. According to one example, the different types of activities may include at least one of sharing, viewing, or searching.

According to one embodiment, scores corresponding to each of the plurality of pieces of additional information may be calculated by assigning different weights to different types of activities, for example, sharing, viewing, and searching.

According to one example, when a matrix representing scores for the plurality of pieces of additional information is obtained based on a preset algorithm and the obtained matrix is updated based on user history information for the plurality of pieces of additional information, the plurality of pieces of additional information may be rearranged on the UI screen based on the updated matrix.

According to one embodiment, when viewing of the content is completed, a UI screen including commentary information (or commentary content or a report) related to the content may be provided.

Meanwhile, according to one embodiment, the commentary information may be obtained through the server 40, but it is also possible to obtain the commentary information in the electronic apparatus 100. Hereinafter, embodiments in which the commentary information is obtained in the electronic apparatus 100 will be described. However, at least some of operations performed in the electronic apparatus 100 may be performed through the server 40 even if not explicitly stated otherwise.

According to one embodiment, when a user reaction is identified while the content is being shared with an external apparatus, commentary information related to the content may be obtained during a period in which the user reaction occurs. Thereafter, when viewing of the content is completed, the processor 130 may provide a content report including information about the user reaction and the commentary information. According to one example, the user reaction may include at least one of a voice reaction, a chat reaction, a facial expression reaction, or a gesture reaction. According to one example, the commentary information may include at least one of screen capture information, conversation information, or sharing information. For example, the screen capture information may be information obtained by capturing a screen of the electronic apparatus 100 while the user reaction occurs. For example, the conversation information may include at least one of conversation information between participants including input text input through an input window while the user reaction occurs or conversation information between participants through voice. For example, the sharing information may include information shared between participants while the user reaction occurs, for example, information shared through a shared UI screen.

For example, the electronic apparatus 100 and/or the server 40 may detect a face position of a user included in captured image data acquired through a camera and may identify a facial expression of the user using eyes, a nose, a mouth, and the like included in the user's face. As a facial region detection method, various conventional methods may be used. Specifically, a direct recognition method and a statistical method may be used. The direct recognition method generates rules using physical features such as an outline of a facial image, a skin color, sizes of components, or distances between components, and performs comparison, inspection, and measurement according to the rules. The statistical method detects a facial region according to a pre-trained algorithm. In other words, unique features included in an input face are converted into data and compared and analyzed with a prepared large database (faces and shapes of other objects). In particular, facial regions may be detected according to a pre-trained algorithm, and methods such as a Multi Layer Perceptron (MLP) and a Support Vector Machine (SVM) may be used.

For example, the electronic apparatus 100 and/or the server 200 may obtain user conversation information using speech recognition technology. Speech recognition refers to processing in which a computer interprets a spoken language of a person and converts the spoken language into text data, and is also referred to a Speech-to-Text (STT). A representative algorithm is a Hidden Markov Model (HMM), which statistically models speech uttered by various speakers to construct an acoustic model and constructs a language model through corpus collection.

According to one example, the content report may include per-scene ratings to be calculated in a timeline order based on the information about the user reaction and the commentary information. According to one example, a content section from a time point at which a specific user reaction is identified to a time point at which a reaction related to the specific user reaction ends may be identified as one scene.

According to one example, when a user reaction is identified as corresponding to a preset emotion, commentary information related to the content may be obtained during a period in which the user reaction occurs. For example, the preset emotion may include at least one of a positive emotion or a negative emotion.

According to one example, when a user image is input, an emotion corresponding to the user reaction may be identified using an artificial intelligence model trained to classify emotion information.

According to one example, when a user voice is input, an emotion corresponding to the user reaction may be identified using an artificial intelligence model trained to classify emotion information.

According to one embodiment, the processor 130 may control the display 110 to display a user area including user captured image data on one side of the content area. According to one example, the user area may be a co-viewing user area including captured image data of a plurality of users connected through the co-viewing application. For example, the content area may be provided at an upper portion of a screen and the user area may be provided at a lower portion of the screen, but the present disclosure is not limited thereto.

According to one embodiment, when a user reaction is identified as corresponding to a preset emotion, the processor 130 may control the display 110 to temporarily switch and display the user captured image data including the user reaction and the content area. For example, the preset emotion may include at least one of a positive emotion or a negative emotion.

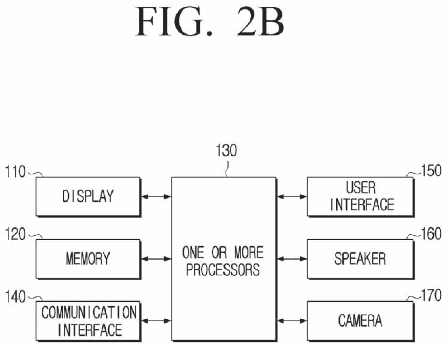

FIG. 2B is a view provided to explain detailed configuration of an electronic apparatus according to one or more embodiments.

Referring to FIG. 2B, an electronic apparatus 100' includes an output unit 110, memory 120, one or more processors 130, a communication interface 140, a user interface 150, a sensor 160, a camera 170, a speaker 180, and a power supply 190. Among the components illustrated in FIG. 2B, detailed descriptions of components that overlap with those illustrated in FIG. 2A will be omitted.

The communication interface 140 includes circuitry, and may perform communication with an external apparatus (a server or a user terminal). For example, the processor 130 may receive various types of data or information from an external apparatus connected via the communication interface 140, and may also transmit various types of data or information to the external apparatus.

The communication interface 140 may include at least one of a Wireless Fidelity (Wi-Fi) module, a Bluetooth module, a wireless communication module, a Near Field Communication (NFC) module, or an Ultra-Wide Band (UWB) module. In this case, the wireless communication module may perform communication according to various communication standards such as the Institute of Electrical and Electronics Engineers (IEEE), Zigbee, third generation (3G), Third Generation Partnership Project (3GPP), Long Term Evolution (LTE), and fifth generation (5G).

In addition, the communication interface 140 may perform communication according to communication schemes such as Ethernet, IEEE 1394, High-Definition Multimedia Interface (HDMI), Universal Serial Bus (USB), Mobile High-Definition Link (MHL), Audio Engineering Society / European Broadcasting Union (AES/EBU), optical, and coaxial communication schemes, depending on an implementation example of the electronic apparatus 100'.

The user interface 150 may be implemented as devices such as buttons, a touch pad, a mouse, and a keyboard, or may be implemented as a touch projection surface capable of performing both the above-described display function and operation input function, a remote control transceiver, or the like. The remote control transceiver may receive a remote control signal from an external remote control apparatus or transmit a remote control signal through at least one communication scheme among infrared communication, Bluetooth communication, and Wi-Fi communication.

The speaker 180 may output an audio signal. According to one example, the speaker 180 may include a plurality of speaker units (or amplifiers) capable of outputting multiple channels. For example, the speaker 180 may include an L-channel speaker and an R-channel speaker that respectively reproduce an L channel and an R channel.

The camera 170 may be turned on according to a preset event to perform image capturing. The camera 170 may convert captured images into electrical signals and generate image data based on the converted signals. For example, a subject may be converted into an electrical image signal through a Charge Coupled Device (CCD), and the converted image signal may be amplified, converted into a digital signal, and then signal-processed.

According to one embodiment, the processor 130 may identify a user's gesture, gaze, and the like based on captured image data acquired through the camera 170, and may identify whether a user command is input based on the identified gesture, gaze, and the like.

In addition, the electronic apparatus 100' may further include a microphone, sensors, and the like depending on an implementation example. The microphone is configured to receive a user's voice or other sounds and convert the received sounds into audio data. However, according to another embodiment, the electronic apparatus 100' may receive a user's voice input through an external apparatus via the communication interface 140. The sensors may include various types of sensors such as a distance sensor, an illuminance sensor, an image sensor, a touch sensor, a proximity sensor, an acceleration sensor, a geomagnetic sensor, a gyro sensor, a pressure sensor, and a position sensor.

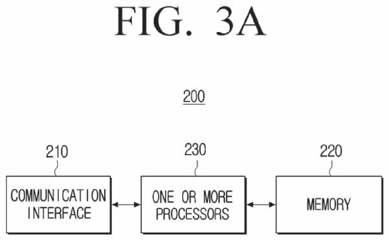

FIG. 3A is a block diagram illustrating configuration of a server according to an embodiment.

According to FIG. 3A, a server 200 includes a communication interface 210, memory 220, and one or more processors 230. According to one example, the electronic apparatus 100 may be implemented as the server 40 illustrated in FIG. 1. Since configurations of the communication interface 210, the memory 220, and the one or more processors 230 are the same as or similar to those of the communication interface 140, the memory 120, and the one or more processors 130 illustrated in FIGS. 2A and 2B, detailed descriptions thereof will be omitted. Hereinafter, for convenience of description, the one or more processors 230 will be referred to as a processor 230.

According to one embodiment, the processor 130 may configure a database (DB) for managing video chat participants and a chat room and store the database in the memory 120.

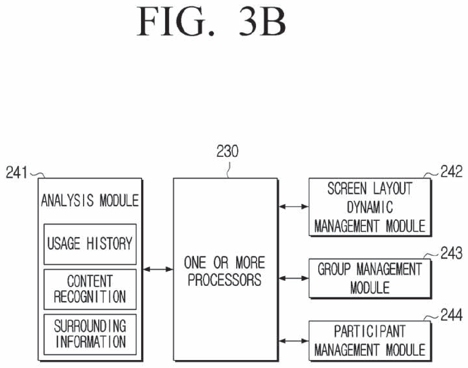

FIG. 3B is a block diagram provided to explain an operation of a server according to an embodiment.

According to FIG. 3B, the processor 230 may provide a content co-viewing service using an analysis module 241, a screen layout dynamic management module 242, a group management module 243, and a participant management module 244. Here, each module may be implemented using at least one of software, hardware, and/or a combination thereof.

For example, at least one of the analysis module 241, the screen layout dynamic management module 242, the group management module 243, and the participant management module 244 may be implemented to use predefined algorithms, predefined formulas, and/or trained artificial intelligence models. The analysis module 241, the screen layout dynamic management module 242, the group management module 243, and the participant management module 244 may be included in the server 200, but according to one example, may be distributed to at least one external apparatus (for example, the electronic apparatus 100).

According to one example, the processor 230 may analyze a real-time viewing situation based on content analysis, content recognition, content usage history, content surrounding information, and the like using the analysis module 241.

For example, the analysis module 241 may analyze the real-time viewing situation based on at least one of a user's content usage history (for example, a history of sharing major interest information), a commentary generation history (for example, a history of reaction occurrences during co-viewing), content recognition information (for example, image recognition information), or surrounding environment information (for example, viewer voice and facial expression information).

According to one example, the processor 230 may dynamically configure and manage a screen provided through the electronic apparatus 100 using the screen layout dynamic management module 242.

For example, the screen layout dynamic management module 242 may perform operations related to a connected user area, an additional information overlay to be displayed on a user's screen, selection and/or sharing of information to be shared, content area information, and provision of real-time reaction effects based on viewer reactions.

According to one example, the processor 230 may perform remote participant identification and image information processing operations using the group management module 243.

According to one example, the processor 230 may create and manage a group of users invited to co-viewing using the participant management module 244.

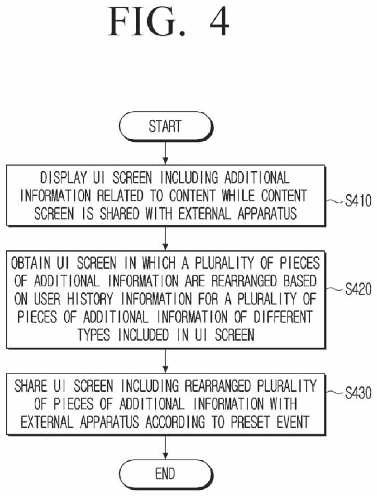

FIG. 4 is a flowchart provided to explain a controlling method of an electronic apparatus according to one or more embodiments.

According to one embodiment, in operation 410, the electronic apparatus 100 may display a UI screen including additional information related to content while the content is being shared with an external apparatus. According to one example, the electronic apparatus 100 may execute a co-viewing application to share a content area with the external apparatus 100.

According to one example, the UI screen including the additional information may be provided through a single-view screen. For example, while the content area may be shared with a user of the external apparatus, the UI screen including the additional information may not be shared.

In operation 420, the electronic apparatus 100 may obtain a UI screen in which a plurality of pieces of additional information are rearranged based on user history information for a plurality of pieces of additional information of different types included in the UI screen.

In operation 430, the electronic apparatus 100 may share the UI screen including the rearranged plurality of pieces of information with the external apparatus according to a preset event. For example, the preset event may include an event in which a user command for sharing the UI screen is input.

Meanwhile, in FIG. 4, for convenience of description, an order is mapped to all steps; however, the order of the steps that are not dependent on sequence or that can be performed in parallel is not necessarily limited to the illustrated order.

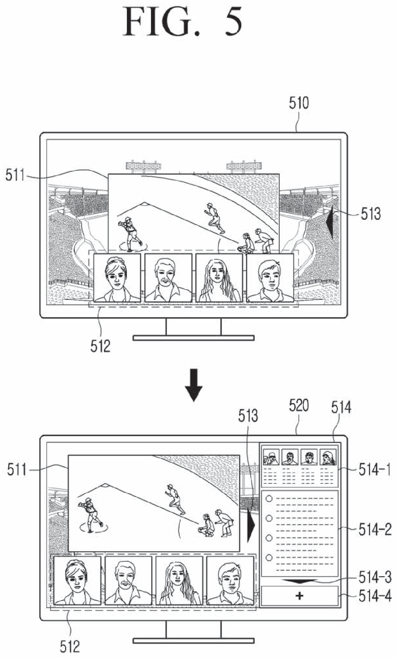

FIG. 5 is a view provided to explain an example of a UI screen according to one or more embodiments.

FIG. 5 is a view provided to explain a first screen provided to a user when a co-viewing application is executed according to one embodiment.

According to one example, as illustrated on the left side of FIG. 5, a first screen 510 may include a content area 511 and a co-viewing user area 512. For example, the first screen 510 may include a graphical user interface (GUI) (or an indicator) 513 for providing a UI screen including additional information. For example, the content area 511 and the co-viewing user area 512 may be provided to all users connected through the co-viewing application.

According to one example, the first screen 510 may include a theme image as a background area. For example, the background area of the content area 511 and the co-viewing user area 512 may include various types of theme images. For example, the theme images may include various themes such as a theater theme, a nature theme, and a city theme. In some cases, the theme image may be a theme image related to a type of content provided in the content area 511.

According to one example, a second screen including information displayed only to a user of the electronic apparatus 100 may be provided according to a user command.

According to one example, as illustrated on the right side of FIG. 5, the second screen 520 may additionally provide a UI screen 514 including additional information. For example, the UI screen 514 including the additional information may be additionally provided according to a user command of clicking and swiping the GUI 513 for providing the UI screen to the left. In this case, the UI screen 514 may be provided in a single-view manner only to the user of the electronic apparatus 100 until a preset event occurs.

According to one example, the UI screen 514 may be provided in a form overlaid on the content area 511 and the co-viewing user area 512 while sizes of the content area 511 and the co-viewing user area 512 are maintained.

For example, the electronic apparatus 100 may output the content area 511 and the co-viewing user area 512 as a first display layer, and may output the UI screen 514 as a second display layer in front of the first display layer. According to one example, the electronic apparatus 100 may obtain an output image by performing alpha blending on the first display layer and the second display layer. Here, alpha blending refers to a method of assigning a new value A (Alpha) to RGB color values in order to provide a transparency effect when one image is overlaid on another image, and displaying the image by mixing background RGB values and RGB values of the overlaid image.

For example, the Alpha value may be represented as a value in a range of 0 to 255 or a value in a range of 0.0 to 1.0, where 0 may indicate completely transparent and a maximum value such as 255 (or 1.0) may indicate fully opaque. Alternatively, 0 may indicate fully opaque and a maximum value such as 255 (or 1.0) may indicate completely transparent. For example, when 8 bits are allocated to the Alpha value to represent values from 0 to 255, a higher value may indicate a higher ratio of a corresponding pixel, and a lower value may indicate a lower ratio. For example, as transparency of areas corresponding to the content area 511 and the co-viewing user area 512 increases, regions other than the UI screen 514 may be provided as an original image.

According to another example, the UI screen 514 may be provided in an available region generated as sizes of the content area 511 and the co-viewing user area 512 are reduced.

According to one example, the UI screen 514 including the additional information may include a plurality pieces of UI information of different types. For example, as illustrated in FIG. 5, the UI screen 514 may include casting information 514-1, review rating information 514-2, director information 514-3, and a more-view screen 514-4.

Meanwhile, according to a user command of clicking and swiping the GUI 513 for providing the UI screen to the right, the UI screen 514 including the additional information may disappear from the screen.

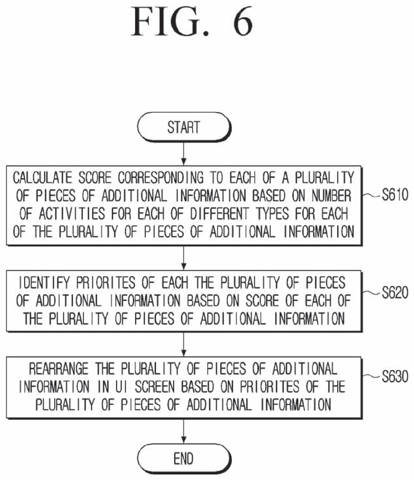

FIG. 6 is a flowchart provided to explain an additional information rearranging method according to one or more embodiments.

According to one embodiment, rearrangement of the additional information may be performed by computation of the server 200. However, in some cases, at least some of the computation may be performed by the electronic apparatus 100. Hereinafter, for convenience of description, a case in which rearrangement of the additional information is performed by the server 200 will be assumed and described.

According to FIG. 6, in operation 610, the server 200 may calculate a score corresponding to each of the plurality of pieces of additional information based on the number of different types of activities for each of the plurality of pieces of additional information.

In operation 620, the server 200 may identify priorities of the plurality of pieces of additional information based on the scores of the plurality of pieces of additional information.

In operation 630, the server 200 may rearrange the plurality of pieces of additional information on the UI screen based on the priorities of the plurality of pieces of additional information. In this case, the electronic apparatus 100 may receive the UI screen in which the additional information is rearranged from the server 200 and display the UI screen.

Meanwhile, in FIG. 6, for convenience of description, an order is mapped to all steps; however, the order of the steps that are not dependent on sequence or that can be performed in parallel is not necessarily limited to the illustrated order.

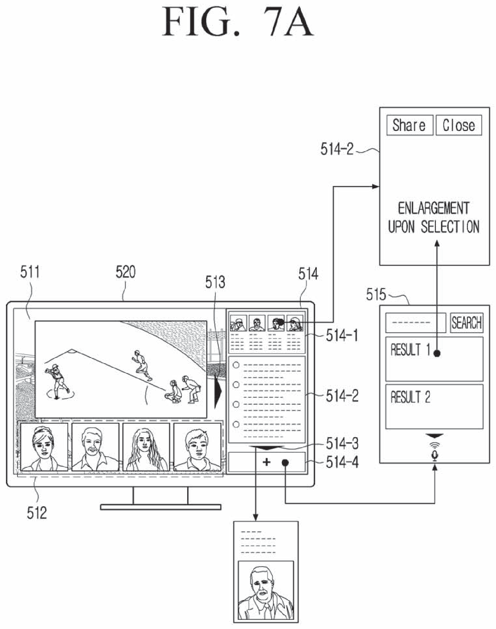

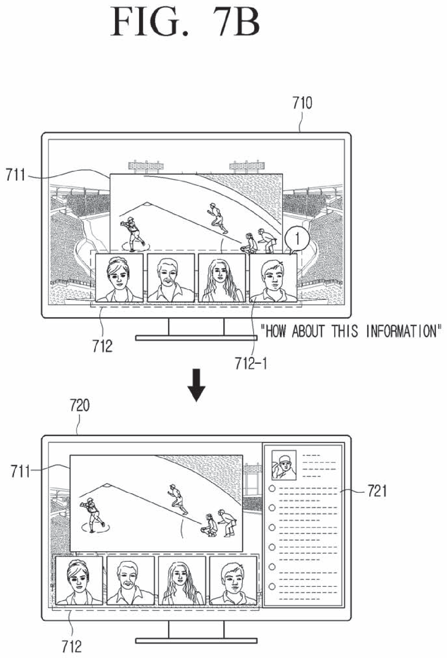

FIGS. 7A and 7B are views provided to explain examples of a UI screen according to one or more embodiments.

According to one example, as illustrated in FIG. 7A, a single-view screen 520 may include a content area 511, a user area 512, and a UI screen 514 including additional information.

For example, as illustrated in FIG. 7A, the UI screen 514 may include casting information 514-1, review rating information 514-2, director information 514-3, and a more-view screen 514-4.

According to one example, as illustrated in FIG. 7A, when a specific sub-area included in the UI screen 514, for example, the casting information 514-1, is selected by a user, the selected sub-area may be enlarged and displayed as 514-2.

According to one example, as illustrated in FIG. 7A, a specific sub-area included in the UI screen 514, for example, the director information area 514-3, may be displayed as a hidden area after scrolling.

According to one example, when the more-view screen 514-4 is selected by a user, a sub-area 515 including additional information, for example, ending information, may be additionally displayed. For example, when additional information (or new information) is searched, a microphone may be temporarily turned off. For example, when a sub-area is additionally provided, a user may additionally search for new information through a text search or a voice search after holding a button.

According to one example, as illustrated in an upper portion of FIG. 7B, a co-viewing screen 710 may include a content area 711 and a co-viewing user area 712. According to one example, as illustrated in the upper portion of FIG. 7B, when a notification displayed on an image 712-1 of a user of the electronic apparatus 100 in the co-viewing user area 712 is selected, information 721 to be shared with another user may be displayed on a co-viewing screen 720 as illustrated in a lower portion of FIG. 7B. For example, a user may utter "How about this information" and select a notification displayed on the user's own image 721-2 to share desired information with another user.

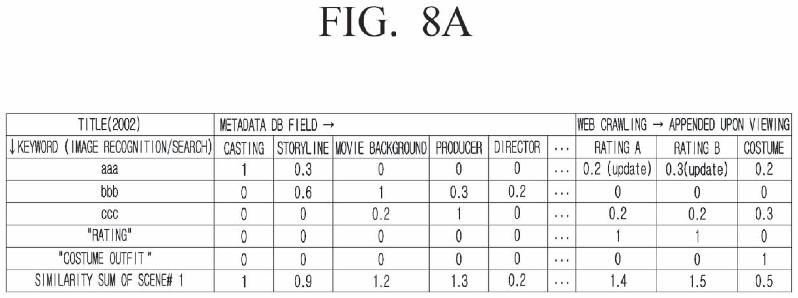

FIGS. 8A to 8E are views provided to explain an additional information rearranging method according to one or more embodiments.

According to one embodiment, the server 200 may obtain major interest information based on content recognition and may rearrange the major interest information based on user history information. According to one example, the server 200 may generate a similarity matrix based on keywords and metadata obtained through content recognition such as keyword extraction, and may obtain a major interest information profile.

According to one example, as illustrated in FIG. 8A, the server 200 may configure a similarity matrix (or a scene similarity matrix) of metadata for each keyword based on content recognition results. For example, scores included in the similarity matrix may be normalized scores in a range of 0 to 1. For example, as illustrated in FIG. 8A, a Collaborative Filtering (CF) algorithm such as Term Frequency-Inverse Document Frequency (TF-IDF) may be used as a base matrix of the similarity matrix, but the present disclosure is not limited thereto. The CF algorithm is based on an assumption that users who like the same content have similar content preferences. For example, if "user a" likes content A and B, and "user b" likes content B and C, content C may be recommended to user a, and content A may be recommended to user b. As the number of users participating in content evaluation increases and more data is accumulated, a machine learning technique capable of improving recommendation accuracy may be applied.

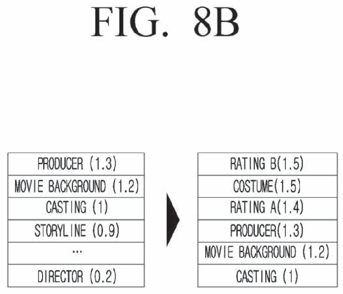

According to one example, as illustrated in FIG. 8B, when an interest information profile based on content recognition results is obtained, the server 200 may rearrange an order of the interest information profile according to a user search. For example, the server 200 may configure a query corresponding to the user search in a form of "content title" (prefix) + "search term." If a field corresponding to a query result of the user search does not exist in a metadata database (MetaData DB), the server 200 may provide a web crawling result and then add information selected and viewed by the user to a field of the MetaData DB. For example, a database field name may use a word having the highest frequency of occurrence, and an existing similarity matrix may be updated based on a keyword extracted during a direct search by a user.

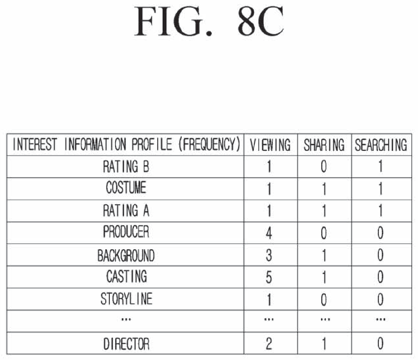

According to one example, as illustrated in FIG. 8C, the server 200 may update the interest information profile based on user history. For example, the user history information may include activities and/or frequencies indicating a degree of user interest in the interest information. For example, the user activities may include at least one of viewing, sharing, and new searching.

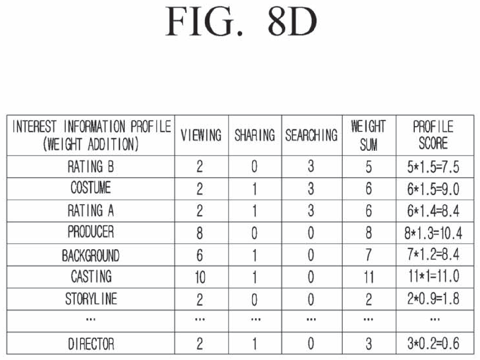

According to one example, as illustrated in FIG. 8D, the server 200 may calculate weights for the interest information profile based on the user history. For example, a scene profile score (weight sum × similarity) may be calculated after adding weighted ratios (click × weight). For example, weights may be calculated as sharing × i, viewing × (i+1), and new searching × (i+2). For example, weights may be calculated as sharing × 1, viewing × 2, and searching × 3. For example, since the purpose is to arrange a shared target item at a forefront, a greater weight may be assigned to an activity indicating a degree of interest prior to sharing. Here, viewing may refer to an activity of selecting and viewing information provided by the system, sharing may refer to an activity of selecting a share button to share information with others, and searching may refer to an activity of selecting a search button while performing a text-based search or selecting a voice assistant button in order to perform a voice-based search.

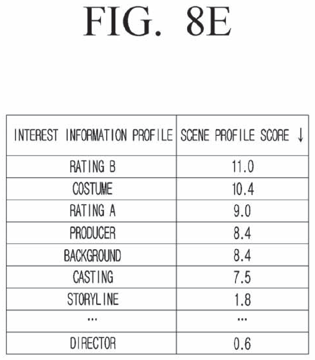

According to one example, as illustrated in FIG. 8E, the server 200 may rearrange an interest information layout based on weights calculated for the interest information profile. For example, when scene profile scores are tied, a profile added through searching may be assigned a relatively higher priority, and when they are still tied, interest information profiles may be arranged in chronological order based on when each profile was added. For example, the order of addition may be identified based on a time stamp added to the MetaData DB.

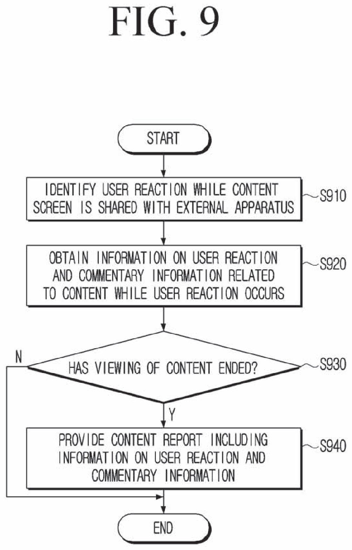

FIG. 9 is a flowchart provided to explain a content report providing method according to one or more embodiments.

According to FIG. 9, in operation 910, the electronic apparatus 100 may identify a user reaction while content is being shared with an external apparatus. For example, various user reactions such as a user gesture, a user voice, and user input text may be identified through various sensors such as a camera, a microphone, and a touch sensor.

In operation 920, the server 200 may obtain information about the user reaction and commentary information related to the content during a period in which the user reaction occurs.

In operation 930, when viewing of the content is completed (S930: Y), the electronic apparatus 100 may provide a content report including the information about the user reaction and the commentary information.

Meanwhile, in FIG. 9, for convenience of description, an order is mapped to all steps; however, the order of the steps that are not dependent on sequence or that can be performed in parallel is not necessarily limited to the illustrated order.

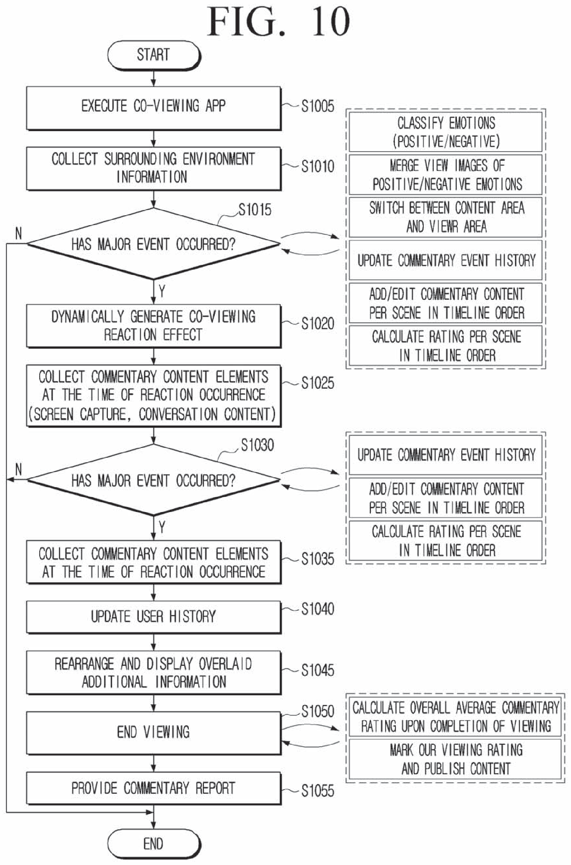

FIG. 10 is a flowchart provided to explain a content report providing method in detail according to one or more embodiments.

According to one embodiment, each operation of a content report providing method illustrated in FIG. 10 may be performed by the electronic apparatus 100 and/or the server 200, and hereinafter, each step will be described as being performed by the electronic apparatus 100 and/or the server 200 without distinguishing a subject performing each step.

According to FIG. 10, in operation 1005, the electronic apparatus 100 may execute a co-viewing application according to a user command.

In operation 1010, the electronic apparatus 100 may collect surrounding environment information while the co-viewing application is being executed. For example, the surrounding environment information may include a user image, a user voice, conversation content, and the like.

In operation 1015, the electronic apparatus 100 and/or the server 200 may identify whether a major event occurs. For example, the major event may include a user reaction.

In operation 1015, when it is identified that the major event has occurred (S1015: Y), the electronic apparatus 100 and/or the server 200 may dynamically generate a co-viewing reaction effect in operation 1020.

According to one example, the electronic apparatus 100 and/or the server 200 may classify an emotion according to the user reaction. For example, the electronic apparatus 100 and/or the server 200 may classify the emotion according to the user reaction as "positive" or "negative."

According to one example, when the user reaction occurs, the electronic apparatus 100 and/or the server 200 may switch and display a content area and a viewer area.

According to one example, when the user reaction occurs, the electronic apparatus 100 and/or the server 200 may update a commentary event history based on the user reaction.

According to one example, the electronic apparatus 100 and/or the server 200 may add and/or edit commentary content for each scene in a timeline order.

According to one example, the electronic apparatus 100 and/or the server 200 may calculate a per-scene rating in a timeline order.

In operation 1025, the electronic apparatus 100 and/or the server 200 may collect commentary content elements at a time when the reaction occurs. For example, the electronic apparatus 100 and/or the server 200 may collect a screen capture, conversation content, a user response, and the like at the time when the reaction occurs.

In operation 1030, when a major event occurs (S1030: Y), the electronic apparatus 100 and/or the server 200 may collect commentary content elements at a time when the reaction occurs in operation 1035. For example, the major event may include an interest information sharing event. For example, the commentary content elements may include a screen capture at a time of sharing the interest information, conversation content, shared information, a user response, and the like. For example, the commentary content elements may include a screen capture at a time of sharing interest information related to content attributes, conversation content, shared information, a user response, and the like. For example, the content attributes may include various attributes such as content itself, a content episode, a detailed genre (for example, baseball or reality variety), a broadcast time, a character, an item, an emotion, a video, a background image, sound, and a scene.

According to one example, the electronic apparatus 100 and/or the server 200 may update a commentary event history based on the sharing of the interest information.

According to one example, the electronic apparatus 100 and/or the server 200 may add and/or edit commentary content for each scene in a timeline order based on the sharing of the interest information.

According to one example, the electronic apparatus 100 and/or the server 200 may calculate a per-scene rating in a timeline order based on the sharing of the interest information.

In operation 1040, the electronic apparatus 100 and/or the server 200 may update a user history. For example, the user history may include information about a sharer of the interest information.

In operation 1045, the electronic apparatus 100 and/or the server 200 may rearrange and provide additional information provided on a UI screen.

In operation 1050, when viewing of the content is completed, the electronic apparatus 100 and/or the server 200 may provide co-viewing commentary information for the content in operation 1055.

According to one example, at the time of completion of viewing, the electronic apparatus 100 and/or the server 200 may calculate an average commentary rating for the entire content, mark viewing ratings of users who have co-viewed the content (for example, "our viewing rating"), and disclose the content.

Meanwhile, in FIG. 10, for convenience of description, an order is mapped to all steps; however, the order of the steps that are not dependent on sequence or that can be performed in parallel is not necessarily limited to the illustrated order.

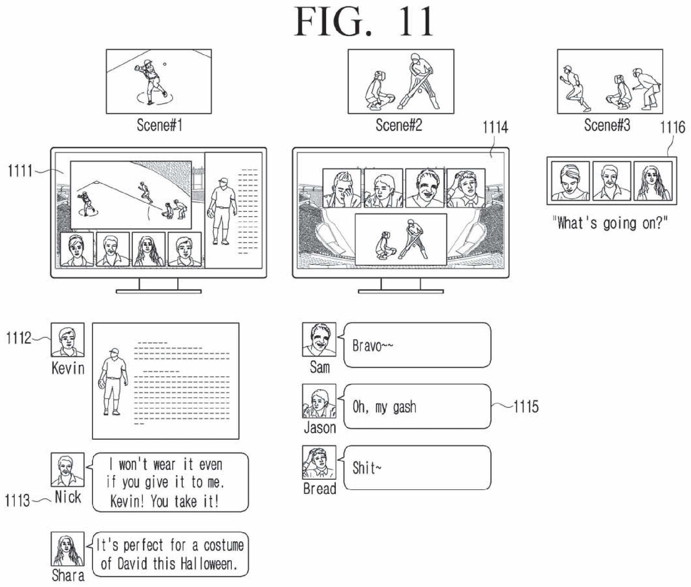

FIG. 11 is a view provided to explain a method of generating co-viewing commentary information according to one or more embodiments.

According to one embodiment, while content co-viewing is in progress, commentary information for each scene may be generated in a timeline order.

According to FIG. 11, a total of three events may occur while content is being viewed. In this case, a scene may be identified at a time point at which each event occurs, and commentary information corresponding to each scene may be generated.

According to one example, when an additional information sharing event 1111 occurs in scene #1, commentary information including shared information 1112 and reaction information 1113 of each user with respect to the shared information 1112 may be generated. For example, scene #1 may be identified from a time point at which a user selects a share button and interest information is shared to a co-viewing screen. For example, the commentary information corresponding to scene #1 may include a snapshot of a co-viewing video in which the event occurred, a snapshot of a face image/photo of a user who shared the information at a sharing time and a snapshot of the shared information, a face image/photo of a user who mentioned the shared user at the sharing time, a voice text record, and the like.

According to one example, when a major user reaction occurs in scene #2, a user image and a content image may be switched and provided (1114), and commentary information including a snapshot (1114) of a co-viewing video and information (1115) about the major user reaction may be generated. For example, the major user reaction may include a reaction expressing a specific emotion such as joy, anger, drowsiness, or booing.

According to one example, the electronic apparatus 100 and/or the server 200 may analyze images captured by a camera and/or voices received through a microphone during co-viewing to classify an emotion of a reaction as a positive emotion or a negative emotion. For example, the electronic apparatus 100 and/or the server 200 may analyze a viewer's facial expression included in captured images and/or conversation content included in voices. For example, the positive emotion may include joy (including laughter, cheering, and sounds of encouragement). For example, the negative emotion may include anger (for example, an angry facial expression due to dissatisfaction, abusive conversation content, or conversation booing another viewer) and boredom (for example, a drowsy face or booing sounds or conversation).

According to one example, the electronic apparatus 100 and/or the server 200 may classify an emotion of a reaction as a positive emotion or a negative emotion using a trained artificial intelligence model. For example, when an image is input, the artificial intelligence model may be trained to classify a user's emotion included in the image and output emotion information of a specific type. For example, the artificial intelligence model may be trained to classify a user's emotion included in a voice when the voice is input and output emotion information of a specific type.

Here, that an artificial intelligence model is trained means that a basic artificial intelligence model (for example, an artificial intelligence model including arbitrary random parameters) is trained using a plurality of training data by a training algorithm, thereby generating predefined operation rules or an artificial intelligence model configured to perform desired characteristics (or purposes). Such training may be performed through a separate server and/or system, but is not limited thereto, and may also be performed in a cooking apparatus. Examples of the training algorithm include supervised learning, unsupervised learning, semi-supervised learning, or reinforcement learning, but are not limited to the foregoing examples.

Here, the artificial intelligence model may be implemented using, for example, a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), or Deep Q-Networks (DQN), but is not limited thereto.

For example, when a major user reaction occurs from at least one viewer among a plurality of viewers in scene #3, a reaction emphasis effect may be provided by switching and displaying a content area and a viewer area. In this case, not only display positions are switched, but also a user reaction screen is enlarged and provided, so that the user reaction may be further emphasized.

According to one embodiment, co-viewing commentary information may include "our viewing rating."

According to one example, whenever a major reaction event occurs for each scene, the server 200 may calculate a rating based on a result of classifying positive/negative emotions. For example, one point may be calculated as a plus point for each user who shares information, and one point may be calculated as a plus point for each user who performs a positive reaction. For example, when even one user makes a negative reaction, zero points may be calculated as minus points. For example, by assigning zero points to negative reactions, the negative reactions may affect an overall average rating.

According to one example, for each piece of viewing content, when an event occurs for N scenes, a rating of a corresponding scene may be calculated based on "(Plus Point + Minus Point) × (5-point rating) conversion coefficient." For example, the conversion coefficient may be calculated as 5 points divided by a total number of connected viewers N. For example, when the number of connected viewers is four, the conversion coefficient may be calculated as 5/4 = 1.25.

For example, in the example illustrated in FIG. 11, a rating of scene #1 may be calculated as plus point 1 × 1.25 (conversion coefficient) = 1.25, a rating of scene #2 may be calculated as plus point 4 × 1.25 (conversion coefficient) = 5, and a rating of scene #3 may be calculated as minus point 0 × 1.25 (conversion coefficient) = 0. In this case, a rating for the entire content may be calculated as an average value after summing ratings of respective scenes. For example, in the example illustrated in FIG. 11, the rating for the entire content may be calculated as (1.25 + 5 + 0) / 3 = 2.08 (rounded to two decimal places).

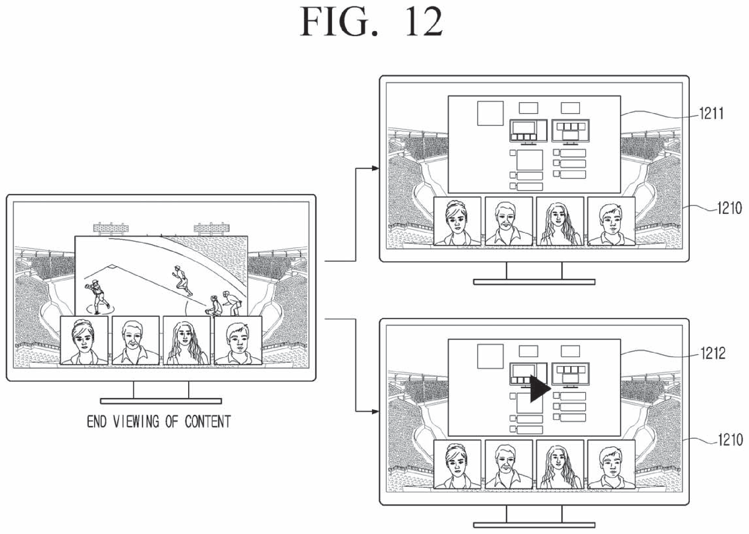

FIG. 12 is a view provided to explain a method of providing co-viewing commentary information according to one or more embodiments.

According to one embodiment, as illustrated in FIG. 12, when viewing of content is completed, co-viewing commentary information generated for the content may be provided. For example, the co-viewing commentary information may be provided in a form of a commentary document 1211 on a screen 1210, or may be provided in a form of a commentary video (for example, an image-based automatically edited video) 1212.

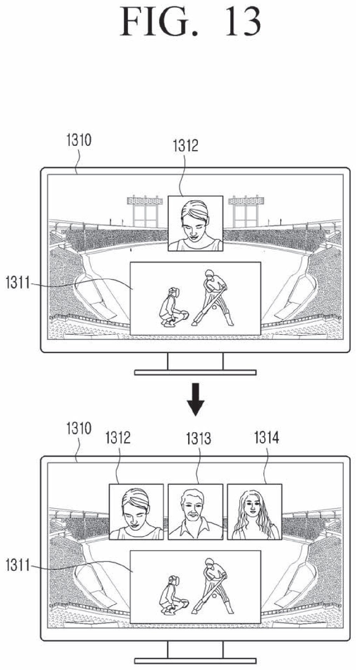

FIG. 13 is a view provided to explain a method of providing a user reaction emphasis effect in detail according to one or more embodiments.

According to the right side of FIG. 13, when the electronic apparatus 100 and/or the server 200 identifies that a user reaction corresponds to a preset emotion, the electronic apparatus 100 and/or the server 200 may temporarily switch and display, on a screen 1310, a user captured image 1312 corresponding to the user reaction and a content area 1311. For example, the preset emotion may include at least one of a positive emotion or a negative emotion. In this case, not only display positions are switched, but also a user reaction screen is enlarged and provided, so that the user reaction may be further emphasized.

According to the left side of FIG. 13, after switching and providing the user captured image 1312 and the content area 1311, the electronic apparatus 100 and/or the server 200 may additionally provide remaining user captured images 1313 and 1314 included in a viewing group in the content area. For example, when a user included in the user captured image 1312 is drowsy, users included in the remaining user captured images 1313 and 1314 may show reactions such as teasing or booing toward the corresponding user. In this case, a reaction emphasis effect may be provided through image switching.

According to the various embodiments described above, while content is co-viewed using video chat, it becomes possible to share major viewing-related interest information. In addition, by detecting major reactions of viewers, a co-viewing commentary may be provided after completion of the viewing. Accordingly, a user experience (UX) associated with co-viewing may be improved.

Meanwhile, the methods according to the various embodiments of the present disclosure described above may be implemented only through a software upgrade or a hardware upgrade for an existing electronic apparatus and/or server.

In addition, the various embodiments of the present disclosure described above may be performed through an embedded server provided in the electronic apparatus or through an external server of the electronic apparatus.

Meanwhile, the above-described various embodiments may be implemented as software including instructions stored in machine-readable storage media, which can be read by machine (e.g.: computer). The machine refers to a device that calls instructions stored in a storage medium, and can operate according to the called instructions, and the device may include an electronic apparatus (e.g.: electronic apparatus (A)), a terminal apparatus, a server apparatus, etc. according to the aforementioned embodiments. In case an instruction is executed by a processor, the processor may perform a function corresponding to the instruction by itself, or by using other components under its control. The instruction may include a code that is generated or executed by a compiler or an interpreter. The machine-readable storage medium may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment, the methods according to various embodiments disclosed in the present disclosure may be included and provided in a computer program product. The computer program product may be traded as a product between a seller and a purchaser. The computer program product may be distributed in the form of a storage medium (e.g., compact disc read only memory (CD-ROM)) that is readable by devices, or may be distributed through an application store (e.g., PlayStore^{™}). In the case of an online distribution, at least part of the computer program product may be at least temporarily stored in a storage medium readable by a machine such as a server of the manufacturer, a server of an application store, or memory of a relay server or may be temporarily generated.

Further, components (e.g., modules or programs) according to various embodiments of the present disclosure may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the various embodiments may be executed in a sequential manner, a parallel manner, an iterative manner, or a heuristic manner, or at least some of the operations may be performed in a different order or be omitted, or other operations may be added.

Although embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. An electronic apparatus comprising:
a display;
memory storing one or more instructions; and
one or more processors,
wherein the one or more processors, by executing the one or more instructions, are configured to:
control the display to display a user interface (UI) screen including additional information related to content while the content is shared with an external apparatus,
based on user history information for a plurality of pieces of additional information of different types included in the UI screen, obtain the UI screen in which the plurality of pieces of additional information are rearranged, and
share the UI screen including the rearranged plurality of pieces of information with the external apparatus according to a preset event.

2. The electronic apparatus of claim 1, wherein, based on a score corresponding to each of the plurality of pieces of additional information being calculated based on a number of activities for each of different types of activities for each of the plurality of pieces of additional information, the plurality of pieces of additional information are rearranged on the UI screen based on priorities of the plurality of pieces of additional information based on the score of each of the plurality of pieces of additional information.

3. The electronic apparatus of claim 2, wherein the different types of activities include sharing, viewing, and searching; and
wherein the one or more processors, by executing the one or more instructions, are configured to:
calculate the score corresponding to each of the plurality of pieces of additional information by assigning different weights to the sharing, the viewing, and the searching.

4. The electronic apparatus of claim 1, wherein the one or more processors, by executing the one or more instructions, are configured to:
based on viewing of the content being terminated, provide a content report including information on a user reaction and commentary information; and
wherein, based on the user reaction being identified while the content is shared with the external apparatus, the commentary information is obtained during occurrence of the identified user reaction.

5. The electronic apparatus of claim 4, wherein the user reaction includes at least one of a voice reaction, a chat reaction, a facial expression reaction, or a gesture reaction; and
wherein the commentary information includes at least one of screen capture information, conversation information, or sharing information.

6. The electronic apparatus of claim 4, wherein the content report includes per-scene ratings calculated in a timeline order based on the information on the user reaction and the commentary information; and
wherein a content section from a time point at which a specific user reaction is identified to a time point at which a reaction related to the specific user reaction ends is identified as one scene.

7. The electronic apparatus of claim 4, wherein the one or more processors, by executing the one or more instructions, are configured to:
based on the user reaction being identified as corresponding to a preset emotion, obtain the commentary information related to the content while the user reaction occurs; and
wherein the preset emotion includes at least one of a positive emotion or a negative emotion.

8. The electronic apparatus of claim 7, wherein the one or more processors, by executing the one or more instructions, are configured to:
control the display to display an image of a user on one side of an area of the content; and
based on the user reaction being identified as corresponding to the preset emotion, control the display to temporarily switch and display the image of the user including the user reaction and the area of the content.

9. The electronic apparatus of claim 1, wherein the plurality of pieces of additional information of different types include at least one of casting, a storyline, a content background, a producer, a director, or a review rating; and
wherein, based on a matrix representing a score for the plurality of pieces of additional information being obtained based on a preset algorithm and the obtained matrix being updated based on the user history information for the plurality of pieces of additional information, the plurality of pieces of additional information are rearranged on the UI screen based on the updated matrix.

10. A server comprising:
a communication interface;
memory storing one or more instructions; and
one or more processors,
wherein the one or more processors, by executing the one or more instructions, are configured to:
based on a preset event occurring while a plurality of external apparatuses share content, provide a user interface (UI) screen including additional information related to the content to one of the plurality of external apparatuses;
obtain the UI screen in which the plurality of pieces of additional information are rearranged based on user history information for a plurality of pieces of additional information of different types included in the UI screen; and
share the UI screen including the rearranged plurality of pieces of information with remaining ones of the plurality of external apparatuses according to the preset event; and
wherein, based on a score corresponding to each of the plurality of pieces of additional information being calculated based on a number of activities for each of different types of activities for each of the plurality of pieces of additional information, the plurality of pieces of additional information are rearranged on the UI screen based on priorities of the plurality of pieces of additional information.

11. A method of controlling an electronic apparatus, the method comprising:
displaying a user interface (UI) screen including additional information related to content while the content is shared with an external apparatus,
based on user history information for a plurality of pieces of additional information of different types included in the UI screen, obtaining the UI screen in which the plurality of pieces of additional information are rearranged, and
sharing the UI screen including the rearranged plurality of pieces of information with the external apparatus according to a preset event.

12. The method of claim 11, wherein, based on a score corresponding to each of the plurality of pieces of additional information being calculated based on a number of activities for each of different types of activities for each of the plurality of pieces of additional information, the plurality of pieces of additional information are rearranged on the UI screen based on priorities of the plurality of pieces of additional information based on the score of each of the plurality of pieces of additional information.

13. The method of claim 12, wherein the different types of activities include sharing, viewing, and searching; and
wherein the one or more processors, by executing the one or more instructions, are configured to:
calculating the score corresponding to each of the plurality of pieces of additional information by assigning different weights to the sharing, the viewing, and the searching.

14. The method of claim 11, wherein the one or more processors, by executing the one or more instructions, are configured to:
based on viewing of the content being terminated, providing a content report including information on the user reaction and commentary information; and
wherein, based on a user reaction being identified while the content is shared with the external apparatus, the commentary information is obtained during occurrence of the identified user reaction.

15. A non-transitory computer-readable recording medium storing a computer instruction that, when executed by a processor of an electronic apparatus, causes the electronic apparatus to:
display a user interface (UI) screen including additional information related to content while the content is shared with an external apparatus,
based on user history information for a plurality of pieces of additional information of different types included in the UI screen, obtain the UI screen in which the plurality of pieces of additional information are rearranged; and
share the UI screen including the rearranged plurality of pieces of information with the external apparatus according to a preset event.
